# EUROPÄISCHE PATENTSCHRIFT

(11) **EP 1 215 698 B1**
(45) Veröffentlichungstag und Bekanntmachung des Hinweises auf die Patenterteilung: **08.08.2007**
(21) Anmeldenummer: 01000719.3
(22) Anmeldetag: 06.12.2001
(51) Int. Cl.: H01J 17/16, H01J 17/49

(54) **Plasmabildschirm mit Leuchtstoffschicht**
Plasma display screen with luminescent layer
Ecran à plasma avec une couche luminescente

(30) Priorität: 12.12.2000 DE 10061720
(43) Veröffentlichungstag der Anmeldung: 19.06.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Jüstel, Thomas c/o Philips Corp. Int. Prop. GmbH, 52066, Aachen (DE); Bechtel, Helmut c/o Philips Corp. Int. Prop. GmbH, 52066, Aachen (DE)
(74) Vertreter: Volmer, Georg

(56) Entgegenhaltungen:
- EP-A- 0 376 339
- EP-A- 1 187 167
- US-A- 5 277 841
- US-A- 6 013 309

## Beschreibung

Die Anmeldung betrifft einen Plasmabildschirm ausgerüstet mit einer Frontplatte, die eine Glasplatte, auf der eine dielektrische Schicht und eine Schutzschicht aufgebracht sind, aufweist, mit einer Trägerplatte ausgestattet mit einer Leuchtstoffschicht, mit einer Rippenstruktur, die den Raum zwischen Frontplatte und Trägerplatte in Plasmazellen, die mit einem Gas gefüllt sind, aufteilt, und mit einem oder mehreren Elektroden-Arrays auf der Frontplatte und der Trägerplatte zur Erzeugung von stillen elektrischen Entladungen in den Plasmazellen.

Plasmabildschirme ermöglichen Farbbilder mit hoher Auflösung, großer Bildschirmdiagonale und sind von kompakter Bauweise. Ein Plasmabildschirm weist eine hermetisch abgeschlossene Glaszelle, die mit einem Gas gefüllt ist, mit gitterförmig angeordneten Elektroden auf. Durch Anlegen einer elektrischen Spannung wird eine Gasentladung hervorgerufen, die Licht im ultravioletten Bereich erzeugt. Durch Leuchtstoffe kann dieses Licht in sichtbares licht umgewandelt und durch die Frontplatte der Glaszelle zum Betrachter emittiert werden.

In heute erhältlichen Plasmabildschirmen werden meistens BaMgAl₁₀O₁₇:Eu (BAM) als blauer, Zn₂SiO₄:Mn (ZSM) als grüner und (Y,Gd)BO₃:Eu (YGB) als roter Leuchtstoff verwendet. Die Auswahl dieser Leuchtstoffe wurde im Wesentlichen im Hinblick auf deren Lichtausbeute bei Anregung mit VUV-Licht und deren Farbpunkte getroffen. Die Farbpunkte der eingesetzten Leuchtstoffe spielen in emissiven Bildschirmen eine enorme Rolle, da diese den maximal zugänglichen Farbraum bestimmen.

Allerdings besitzt jeder der ausgewählten Leuchtstoffe bestimmte Nachteile, die sich nicht ohne weiteres beheben lassen. So zeigt der blaue Leuchtstoff BaMgAl₁₀O₁₇:Eu eine starke Abnahme der Helligkeit durch die Bestrahlung mit VUV-Licht. Als Folge dieser Degradation verschiebt sich der Weißpunkt des Plasmabildschirms in Richtung gelb-orange, da der grüne und insbesondere der rote Leuchtstoff weniger stark degradieren.

Der grüne Leuchtstoff Zn₂SiO₄:Mn hat eine relativ lange Abklingzeit von etwa 10 ms und nur eine mäßige Effizienz bei der Anregung mit VUV-Licht. Die Effizienz nimmt durch die Sättigung mit zunehmender Luminanz weiter deutlich ab. Zudem ist seine Stabilität bei Anregung mit VUV-Licht auch geringer als die des roten Leuchtstoffs (Y,Gd)BO₃:Eu.

Der rote Leuchtstoff (Y,Gd)BO₃:Eu ist zwar sehr effizient unter Anregung mit VUV-Licht, jedoch ist sein Farbpunkt weniger rot als der von Y₂O₂S:Eu, der in Kathodenstrahlröhren verwendet wird.

Um die beschriebenen Nachteile der einzelnen Leuchtstoffe zu umgehen, werden die Leuchtstoffe beispielsweise mit einer Beschichtung versehen oder es werden alternative Leuchtstoffe synthetisiert. So ist aus der DE 197 27 607 beispielsweise ein blau-emittierender Aluminat-Leuchtstoff mit einer Beschichtung aus *catena*-Polyphosphat von ein oder mehreren Erdalkalimetallen, Zink, Cadmium und/oder Mangan bekannt. Durch die Beschichtung aus *catena*-Polyphosphat wird die Degradation des Leuchtstoffes durch die Anregung mit VUV-Licht reduziert. Bisher konnten aber auch keine alternativen Leuchtstoffe zu den drei Standardleuchtstoffen BaMgAl₁₀O₁₇:Eu, Zn₂SiO₄:Mn und (Y,Gd)BO₃:Eu synthetisiert werden, die alle Anforderungen erfüllen und die drei Leuchtstoffe ersetzen könnten.

EP 1 187 167 A1, Dokument gemäß Artikel 54(3) EPÜ, zeigt einen Farbbildschirm ausgerüstet mit einer blauen Leuchstoffschicht, die einen ersten Leuchtstoff, der eine Lichtemission im Bereich von 490 nm aufweist, und einen zweiten Leuchtstoff, der eine Lichtemission im Bereich von 380 bis 450 nm aufweist, enthält. Dadurch wird die Farbtemperatur verbessert.

Es ist deshalb eine Aufgabe der vorliegenden Erfindung, die Nachteile des Standes der Technik zu umgehen und einen verbesserten Plasmabildschirm bereitzustellen.

Diese Aufgabe wird gelöst durch einen Plasmabildschirm ausgerüstet mit einer Frontplatte, die eine Glasplatte, auf der eine dielektrische Schicht und eine Schutzschicht aufgebracht sind, aufweist, mit einer Trägerplatte ausgestattet mit einer Leuchtstoffschicht, die eine heterogene Mischung aus mindestens zwei Leuchtstoffen enthält, die dieselbe Farbe emittieren, mit einer Rippenstruktur, die den Raum zwischen Frontplatte und Trägerplatte in Plasmazellen, die mit einem Gas gefüllt sind, aufteilt, und mit einem oder mehreren Elektroden-Arrays auf der Frontplatte und der Trägerplatte zur Erzeugung von stillen elektrischen Entladungen in den Plasmazellen, wobei die Leuchtstoffschicht in verschiedene Earbsegmente unterteilt ist und wenigstens ein Farbsegment eine heterogene Mischung aus mindestens zwei Leuchtstoffen, die dieselbe Farbe emittieren und ein Leuchtstoff eine kürzere Abklingzeit als der andere hat, enthält.

Durch die Verwendung von zwei verschiedenen Leuchtstoffen, die dieselbe Farbe emittieren, in einer Leuchtstoffschicht können die unerwünschten Eigenschaften der Leuchtstoffe gegenseitig reduziert oder ausgeglichen werden.

Üblicherweise enthält die Leuchtstoffschicht eines Plasmabildschirms verschiedene Farbsegmente mit jeweils einem Leuchtstoff, welcher in einer der Farben blau, grün oder rot emittiert. Durch die Verwendung von zwei verschiedenen Leuchtstoffen, die dieselbe Farbe emittieren, in einem Farbsegment, können die Eigenschaften dieses Farbsegmentes verbessert werden.

Es kann außerdem bevorzugt sein, dass ein Farbsegment der Leuchtstoffschicht eine heterogene Mischung aus (Y,Gd)BO₃:Eu und einem zweiten, rot-emittierenden Leuchtstoff, dessen Farbpunkt (x,y) ein y-Wert < 0.36 aufweist, enthält.

Durch Verwendung einer heterogene Mischung aus (Y,Gd)BO₃:Eu und einem Leuchtstoff, dessen Emissionsfarbe weniger im orangen, sondern im roten Bereich des Farbdreichecks, kann der Farbpunkt eines rot-emittierenden Farbsegments einer Leuchtstoffschicht verbessert werden.

Es ist vorteilhaft, dass der zweite, rot-emittierende Leuchtstoff ausgewählt ist aus der Gruppe Y₂O₃:Eu, YVO₄:Eu, Y(V,P)O₄:Eu und (Y₁₋ₓGdₓ)₂O₃:Eu mit 0 < x < 1.

Diese Eu³⁺-aktivierten Leuchtstoff weisen eine kürzere Abklingzeit als (Y,Gd)BO₃:Eu auf, wodurch auch Bewegungsartefakte bei der Bilddarstellung reduziert werden können. Weiterhin ist es bevorzugt, dass ein Earbsegment der Leuchtstoffschicht eine heterogene Mischung aus Zn₂SiO₄Mn und einem Tb³⁺-aktivierten Leuchtstoff enthält.

Die Abnahme der Helligkeit eines grün-emittierenden Farbsegmentes einer Leuchtstoffschicht während der Lebensdauer eines Plasmabildschirms kann reduziert werden, da Tb³⁺-aktivierte Leuchtstoffe eine höhere Stabilität als Zn₂SiO₄:Mn unter Bestrahlung mit VUV-Licht aufweisen. Denn Tb³⁺ lässt sich nur relativ schwer zu Tb⁴⁺ oxidieren, während Mn²⁺ sehr oxidationsempfindlich ist. Weiterhin kann die Lichtausbeute, insbesondere bei hoher Luminanz, eine grün-emittierenden Earbsegments der Leuchtstoffschicht erhöht werden. Außerdem wird durch eine verminderte Sättigung die Farbbrillanz eines grün-emittierenden Earbsegments verbessert.

Es ist vorteilhaft, dass der Tb³+-aktivierte Leuchtstoff ausgewählt ist aus der Gruppe LaPO₄:Ce,Tb,Y₂SiO₂:Tb, GdMgB₅O₁₀:Ce,Tb, CeMgAl₁₁O₁₉:Tb, GdBO₃:Tb, (Y₁₋ₓGdₓ)BO₃:Tb mit 0 ≤ x ≤ 1, YBO₃:Tb, LaOCl:Tb und InBO₃:Tb.

Diese Tb³⁺-aktivierten Leuchtstoffe besitzen eine kürzere Abklingzeit als Zn₂SiO₄:Mn. Durch eine heterogene Mischung dieser Tb³⁺-aktivierten Leuchtstoffe mit Zn₂SiO₄:Mn in einem grün-emittierenden Farbsegment der Leuchtstoffschicht können Bewegungsartefakte bei der Bilddarstellung reduziert werden.

Es ist besonders bevorzugt, dass ein Farbsegment der Leuchtstoffschicht eine heterogene Mischung aus BaMgAl₁₀O₁₇:Eu und einem Leuchtstoff ausgewählt der aus der Gruppe der Ce³⁺ -aktivierten Leuchtstoffe und der Tm³⁺-aktivierten Leuchtstoffe enthält.

Die Abnahme der Helligkeit einer blau-emittierenden Leuchtstoffschicht bzw. eines blau-emittierenden Farbsegmentes einer Leuchtstoffschicht während der Lebensdauer eines Plasmabildschirnns kann reduziert werden, da Ce³⁺-aktivierte Leuchtstoffe und Tm³⁺-aktivierte Leuchtstoffe eine höhere Stabilität als BaMgAl₁₀O₁₇:Eu unter Bestrahlung mit VUV-Licht aufweisen.

Es ist ganz besonders bevorzugt, dass der Ce³⁺-aktivierte Leuchtstoff ausgewählt ist aus der Gruppe YBO₃:Ce und (Y₁₋ₓGdₓ)BO₃:Ce mit 0 ≤ x ≤ 1.

Es ist auch besonders bevorzugt, dass der Tm³⁺-aktivierte Leuchtstoff LaBO₃:Tm ist.

Weiterhin kann der Farbpunkt eines blau-emittierenden Farbsegments einer Leuchtstoffschicht verbessert werden, da YBO₃:Ce, (Y₁₋ₓGdₓ)BO₃:Ce mit 0 ≤ x ≤ 1 und LaBO₃:Tm eine tiefer blaue Emissionsfarbe besitzen als BaMgAl₁₀O₁₇:Eu.

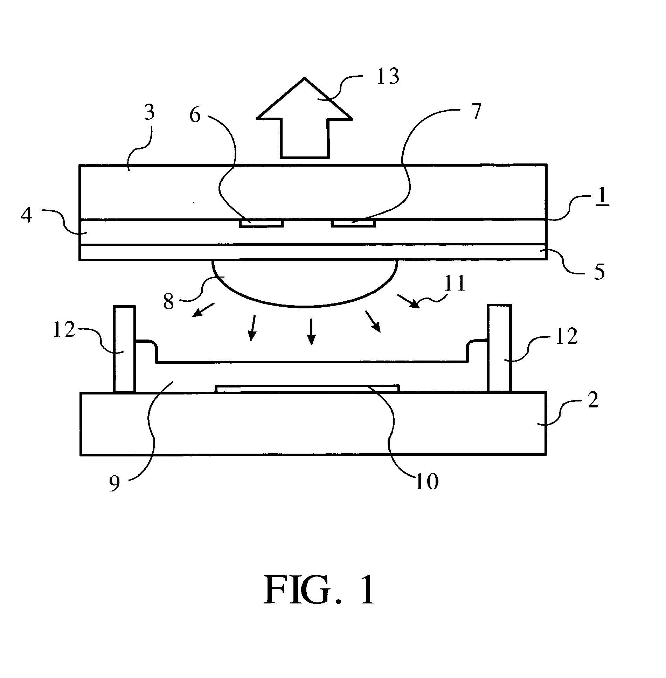

Im folgenden soll anhand von einer Figur und einem Ausführungsbeispiel die Erfindung näher erläutert werden. Dabei zeigt
- Fig. 1: den Aufbau und das Funktionsprinzip einer einzelnen Plasmazelle in einem AC-Plasmabildschirm.

Gemäß Fig. 1 weist eine Plasmazelle eines AC-Plasmabildschirms mit einer koplanaren Anordnung der Elektroden eine Frontplatte 1 und eine Trägerplatte 2 auf. Die Frontplatte 1 enthält eine Glasplatte 3, auf der eine dielektrische Schicht 4 und darauf eine Schutzschicht 5 aufgebracht sind. Die Schutzschicht 5 ist bevorzugt aus MgO und die dielektrische Schicht 4 ist beispielsweise aus PbO-haltigem Glas. Auf die Glasplatte 3 sind parallele, streifenförmige Entladungselektroden 6,7 aufgebracht, die von der dielektrischen Schicht 4 bedeckt sind. Die Entladungselektroden 6,7 sind zum Beispiel aus Metall oder ITO. Die Trägerplatte 2 ist aus Glas und auf der Trägerplatte 2 sind parallele, streifenförmige, senkrecht zu den Entladungselektroden 6,7 verlaufende Adresselektroden 10 aus beispielsweise Ag aufgebracht. Diese sind von einer Leuchtstoffschicht 9, die Licht in einer der drei Grundfarben rot, grün oder blau emittiert, bedeckt. Dazu ist die Leuchtstoffschicht in mehrere Farbsegmente unterteilt. Üblicherweise sind die rot-, grün- bzw. blau-emittierenden Farbsegmente der Leuchtstoffschicht 9 in Form von senkrechten Streifentripeln aufgebracht. Die einzelnen Plasmazellen sind durch eine Rippenstruktur 12 mit Trennrippen aus vorzugsweise dielektrischem Material getrennt.

In der Plasmazelle, als auch zwischen den Entladungselektroden 6,7, von denen jeweils eine im Wechsel als Kathode bzw. Anode wirkt, befindet sich ein Gas, vorzugsweise ein Edelgasgemisch, aus beispielsweise He, Ne oder Kr mit Xe als UV-Licht generierende Komponente. Nach Zündung der Oberflächenentladung, wodurch Ladungen auf einem zwischen den Entladungselektroden 6,7 im Plasmabereich 8 liegenden Entladungsweg fließen können, bildet sich im Plasmabereich 8 ein Plasma, durch das je nach der Zusammensetzung des Gases Strahlung 11 im UV-Bereich, insbesondere im VUV-Bereich,

Komponente Nach Zündung der OberfLächenentladung, wodurch Ladungen auf einem zwischen den Entladungselektroden 6,7 im Plasmabereich 8 liegenden Entladungsweg fließen können, bildet sich im Plasmabereich 8 ein Plasma, durch das je nach der Zusammensetzung des Gases Strahlung 11 im UV-Bereich, insbesondere im VUV-Bereich, erzeugt wird Diese Strahlung 11 regt die Leuchtstoffschicht 9 zum Leuchten an, die sichtbares Licht 13 in einer der drei Grundfarben emittiert, das durch die Frontplatte 1 nach außen tritt und somit einen leuchtenden Bildpunkt auf dem Bildschirm darstellt.

Die dielektrische Schicht 4 über den transparenten Entladungselektroden 6,7 dient unter anderem bei AC-Plasmabildschirmen dazu, eine direkte Entladung zwischen den aus leitfähigem Material bestehenden Entladungselektroden 6,7 und damit die Ausbildung eines Lichtbogens bei Zündung der Entladung zu unterbinden.

Wenigstens ein Farbsegment der Leuchtstoffschicht 9 enthält eine heterogene Mischung aus wenigstens zwei Leuchtstoffen. Eine heterogene Mischung ist ein mindestens zwei Stoffe enthaltenes heterogenes Aggregat.

Ein blau-emittierendes Farbsegment der Leuchtstoffschicht 9 enthält neben BaMgAl₁₀O₁₇:Eu einen Ce³⁺-aktivierten Leuchtstoff oder einen Tm³⁺-akivierten Leuchtstoff. Der Ce³⁺-aktivierte Leuchtstoff kann beispielsweise ausgewählt sein aus der Gruppe YBO₃:Ce und (Y₁₋ₓGdₓ)BO₃:Ce mit 0 ≤ x ≤ 1 und als Tm³⁺-aktivierter Leuchtstoff kann beispielgsweise LaBO₃:Tm verwendet werden.

Wie in Tabelle 1 gezeigt, weisen YBO₃:Ce, (Y₁₋ₓGdₓ)BO₃:Ce mit 0 ≤ x ≤ 1 und LaBO₃:Tm jeweils Abklingzeit kleiner 0.1 ms auf. Weiterhin ist der x-Wert des Farbpunktes der drei Leuchtstoffe ≤ 0.168 und somit erscheint die Emissionsfarbe dieser Leuchtstoffe tiefer blau als die von BaMgAl₁₀O₁₇:Eu. Außerdem weisen die drei Leuchtstoffe eine hohe Lichtausbeute bei Anregung mit VUV-Licht und eine höhere Stabilität als BaMgAl₁₀O₁₇:Eu unter Bestrahlung mit VUV-Licht auf.

**Tabelle 1: Abklingzeiten und Farbpunkte geeigneter blau-emittierender Ce³⁺- und Tm³⁺-aktivierter Leuchtstoffe**

| **Leuchtstoff** | **Abklingzeit [ms]** | **Farbpunkt [x,y]** |
|---|---|---|
| YBO₃:Ce | < 0.1 | 0.165, 0.027 |
| (Y_{0.5}Gd_{0.5})BO₃:Ce | < 0.1 | 0.168, 0.030 |
| LaBO₃:Tm | < 0.1 | 0.168, 0.060 |

Ein grün-emittierendes Farbsegment der Leuchtstoff 9 enthält Zn₂SiO₄:Mn und einen Tb³⁺-aktivierten Leuchtstoff wie zum Beispiel LaPO₄:Ce,Tb,Y₂SiO₅:Tb, GdMgB₅O₁₀:Ce,Tb, CeMgAl₁₁O₁₉:Tb, GdBO₃:Tb, (Y₁₋ₓGd)BO₃:Tb mit 0 ≤ x ≤ 1, YBO₃:Tb, LaOCl:Tb oder InBO₃:Tb.

Wie in Tabelle 2 gezeigt, weisen bis auf InBO₃:Tb alle ausgewählten Tb³⁺-aktivierten Leuchtstoffe eine kürzere Abklingzeit als Zn₂SiO₄:Mn auf. Tb³⁺-aktivierte Leuchtstoffe sind temperatur- und photostabil, da sich Tb³⁺ nur schwer zu Tb⁴⁺ oxidieren lässt. Außerdem weisen diese Tb³⁺-aktivierten Leuchtstoffe eine hohe Lichtausbeute bei Anregung mit VUV-Licht auf.

**Tabelle 2: Abklingzeiten und Farbpunkte geeigneter Tb³⁺ -aktivierter Leuchtstoffe**

| **Leuchtstoff** | **Abklingzeit [ms]** | **Farbpunkt [x,y]** |
|---|---|---|
| LaPO₄:Ce,Tb | 7.5 | 0.352, 0.580 |
| Y₂SiO₅:Tb | 5.0 | 0.331, 0.584 |
| GdMgB₅O₁₀:Ce,Tb | 5.5 | 0.343,0.585 |
| CeMgAl₁₁O₁₉:Tb | 7.0 | 0.329, 0.605 |
| GdBO₃:Tb | 8.0 | 0.336, 0.612 |
| (Y_{0.5}Gd_{0.5})BO₃:Tb | 8.0 | 0.338, 0.615 |
| YBO₃:Tb | 8.0 | 0.338, 0.615 |
| InBO₃:Tb | 16.0 | 0.331, 0.621 |

Ein rot-emittierendes Farbsegment der Leuchtstoffschicht 9 enthält eine heterogene Mischung aus (Y,Gd)BO₃:Eu und einen zweiten, rot-emittierenden Leuchtstoff, dessen Farbpurtkt (x,y) einen y-Wert < 0.36 aufweist. Als zweiter, rot-emittierender Leuchtstoff kann beispielsweise Y₂O₃:Eu, YVO₄:Eu, Y(V,P)O₄:Eu und (Y₁₋ₓGdₓ)₂O₃:Eu mit 0 ≤ x ≤ 1 verwendet werden.

Wie in Tabelle 3 gezeigt, weisen die aufgeführten Leuchtstoffe eine Emission auf, die mehr im roten Bereich des Farbdreiecks liegt als die Emission von (Y,Gd)BO₃:Eu. Außerdem haben diese Leuchtstoffe eine kurze Abklingzeit.

**Tabelle 3: Abklingzeiten und Farbpunkte geeigneter rot-emittierender Eu²⁺-Leuchtstoffe**

| **Leuchtstoff** | **Abklingzeit [ms]** | **Farbpunkt [x,y]** |
|---|---|---|
| Y₂O₃:Eu | 2.5 | 0.642, 0.344 |
| YVO₄:Eu | 3.5 | 0.658, 0.326 |
| Y(V,P)O₄:Eu | 3.5 | 0.662, 0.328 |
| (Y_{0.5}Gd_{0.5})₂O₃:Eu | 2.5 | 0.650,0.337 |

Der Anteil von BaMgAl₁₀O₁₇:Eu (BAM), Zn₂SiO₄:Mn (ZSM) beziehungsweise (Y,Gd)BO₃:Eu liegt in einem Farbsegment zwischen 1 und 99 % bezogen auf den Gesamtanteil an Leuchtstoffen in diesem Farbsegment.

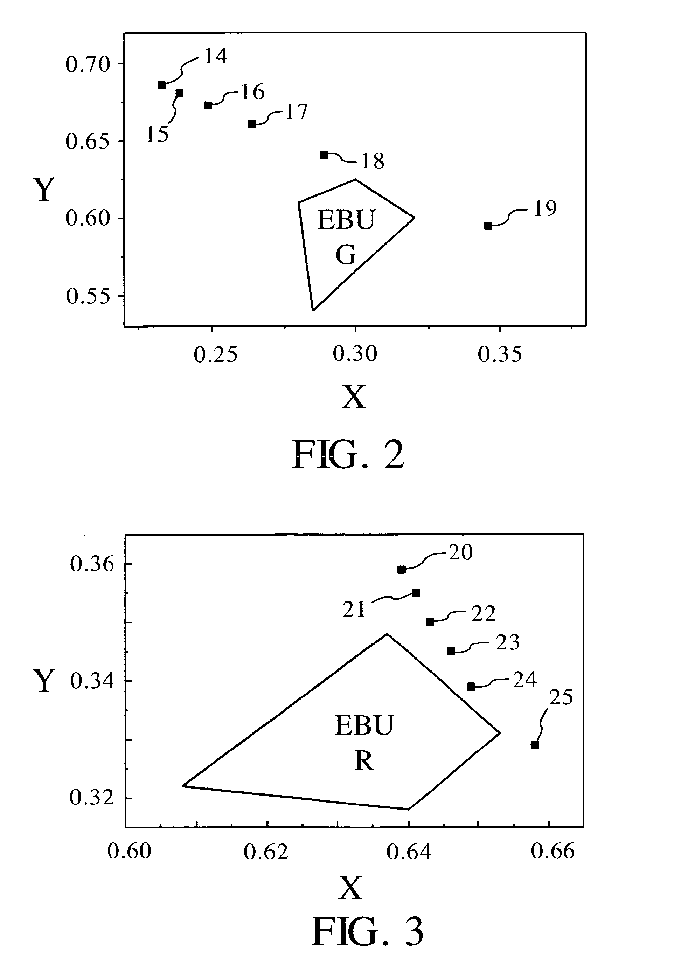

Fig. 2 zeigt die Verschiebung des Farbpunktes eines grün-emittierenden Leuchtstoffsegmentes in einem Plasmabildschirm, dessen Gas ein Gemisch aus 10 Vol.-% Xe und 90 Vol.-% Ne enthält, in Abhängigkeit der Anteile an Zn₂SiO₄:Mn und (Y_{0.5}Gd_{0.5})BO₃:Tb. Farbpunkt 14 entspricht einem grün-emittierenden Leuchtstoffsegment, welches zu 100 % Zn₂SiO₄:Mn enthält und Farbpunkt 19 entspricht einem Leuchtstoffsegment, welches zu 100 % (Y_{0.5}Gd_{0.5})BO₃:Tb enthält. Die Farbpunkte 15 bis 18 sind die Farbpunkte von grün-emittierenden Leuchtstoffsegmenten, welche eine heterogene Mischung aus Zn₂SiO₄:Mn und (Y_{0.5}Gd_{0.5})BO₃:Tb enthalten. Die Zuordnung der Farbpunkte zum jeweiligen Anteil der Leuchtstoffe im grün-emittierenden Leuchtstoffsegment ist in Tabelle 4 aufgeführt. EBU G bezeichnet die EBU-Norm für Grün.

**Tabelle 4: Zuordnung der Farbpunkte 15 bis 18**

| Farbpunkt Nr. | Anteil der Leuchtstoffe |
|---|---|
| 15 | 80 % Zn₂SiO₄:Mn, 20 % (Y_{0.5}Gd_{0.5})BO₃:Tb |
| 16 | 60 % Zn₂SiO₄:Mn, 40 % (Y_{0.5}Gd_{0.5})BO₃:Tb |
| 17 | 40 % Zn₂SiO₄:Mn, 80 % (Y_{0.5}Gd_{0.5})BO₃:Tb |
| 18 | 20 % Zn₂SiO₄:Mn, 20 % (Y_{0.5}Gd_{0.5})BO₃:Tb |

Fig. 3 zeigt die Verschiebung des Farbpunktes eines rot-emittierenden Leuchtstoffsegmentes in einem Plasmabildschirm, dessen Gas ein Gemisch aus 10 Vol.-% Xe und 90 Vol.-% Ne enthält, in Abhängigkeit der Anteile an (Y,Gd)BO₃:Eu und Y(V,P)O₄:Eu. Farbpunkt 20 entspricht einem rot-emittierenden Leuchtstoffsegment, welches zu 100 % (Y,Gd)BO₃:Eu enthält und Farbpunkt 25 entspricht einem rot-emittierenden Leuchtstoffsegment, welches zu 100 % Y(V,P)O₄:Eu enthält. Die Farbpunkte 21 bis 24 sind die Farbpunkte von rot-emittierenden Leuchtstoffsegmenten, welche eine heterogene Mischung aus (Y,Gd)BO₃:Eu und Y(V,P)O₄:Eu enthalten. Die Zuordnung der Farbpunkte zum jeweiligen Anteil der Leuchtstoffe im rot-emittierenden Leuchtstoffsegment ist in Tabelle 5 aufgeführt. EBU R bezeichnet die EBU-Norm für Rot.

**Tabelle 5: Zuordnung der Farbpunkte 21 bis 24**

| Farbpunkt Nr. | Anteil der Leuchtstoffe |
|---|---|
| 21 | 80 % (Y,Gd)BO₃:Eu, 20 % Y(V,P)O₄:Eu |
| 22 | 60 % (Y,Gd)BO₃:Eu, 40 % Y(V,P)O₄:Eu |
| 23 | 40 % (Y,Gd)BO₃:Eu, 80 % Y(VP)O₄:Eu |
| 24 | 20 % (Y,Gd)BO₃:Eu, 20 % Y(V,P)O₄:Eu |

Als Herstellungsverfahren für eine Leuchtstoffschicht 9, welche in mehrere Farbsegmente unterteilt ist, kommen sowohl Trockenbeschichtungsverfahren, z B. elektrostatische Abscheidung oder elektrostatisch unterstütztes Bestäuben, als auch Nasebeschichtungsverfahren, z B. Siebdruck, Dispenserverfahren, bei denen eine Suspension mit einer sich dem Kanälen entlang bewegenden Düse eingebracht wird, oder Sedimentation aus der flüssigen Phase, in Betracht.

Für die Nassbeschichtungsverfahren müssen die beiden Leuchtstoffe eines Farbsegments in Wasser, einem organischen Lösungsmittel, gegebenenfalls zusammen mit einem Dispergiermittel, einem Tensid und einem Antischaummittel oder einer Bindemittelzubereitung dispergiert werden. Geeignet für Bindemittelmbereitungen für Plasmabildschirme sind anorganischen Bindemittel, die eine Betriebstemperatur von 250°C ohne Zersetzung, Versprödung oder Verfärbung überstehen, oder organische Bindemittel, die später durch Oxidation entfernt werden können.

Nach dem Aufbringen der Leuchtstoffschicht 9 auf einer Trägerplatte 2, welche Adresselektroden 10 und eine Rippenstruktur 12 mit Trennrippen aufweist, wird die Trägerplatte 2 mit weiteren Komponenten wie zum Beispiel einer Frontplatte 1 und einem Edelgasgemisch zur Herstellung eines Plasmabildschirms verwendet. Das Edelgasgemisch kann Xenon mit einem Anteil zwischen 5 und 30 Vol.-%, vorzugsweise von 10 Vol.-% enthalten.

In einem Plasmabildschirm können ein oder mehrere Farbsegmente eine heterogene Mischung aus mindestens zwei Leuchtstoffen, die dieselbe Farbe emittieren, enthalten. Besonders bevorzugt ist, dass in einem Plasmabildschirm, der rot-, grün- und blauemittierende Farbsegmente in der Leuchtstoffschicht 9 aufweist, jedes Farbsegment eine heterogene Mischung aus mindestens zwei Leuchtstoffen, die dieselbe Farbe emittieren, enthält.

Alternativ kann auch ein monochromer Plasmabildschirm hergestellt werden. In diesem Fall enthält die Leuchtstoffschicht 9 nur eine heterogene Mischung aus mindestens zwei Leuchtstoffen, die dieselbe Farbe emittieren.

Im folgenden werden Ausführungsformen der Erfindung erläutert, die beispielhafte Realisierungsmöglichkeiten darstellen.

### Ausführungsbeispiel 1

Zur Herstellung eines Plasmabildschirm wurde zunächst eine Siebdruckpaste, 30 Gew.-% (Y,Gd)BO₃:Tb, 20 Gew.-% Zn₂SiO₄:Mn und 50% eines organisches Bindemittels enthielt, angefertigt. Mittels Siebdruck wurde die Paste auf einer Trägerplatte 2 aus Glas mit einer Rippenstruktur 12 und Adresselektroden aus Ag segmentiert aufgebracht und getrocknet. Dieser Prozessschritt wird nacheinander für die anderen beiden Leuchtstofftypen der Emissionsfarben Rot und Blau durchgeführt. Die Siebdruckpaste für das rote Farbsegmente enthielt 50 Gew.-% (Y,Gd)BO₃:Eu und 50% eines organisches Bindemittels. Die Siebdruckpaste für das blaue Farbsegment enthielt 50 Gew.-% BaMgAl₁₀O₁₇:Eu und 50% eines organisches Bindemittels.

Durch thermische Behandlung der Trägerplatte 2 zwischen 400 und 600 °C in sauerstoffhaltiger Atmosphäre wurden alle in der Leuchtstoffschicht 9 verbliebenen Additive entfernt.

Diese Trägerplatte 2 wurde zusammen mit einer Frontplatte aus Glas, die eine dielektrische Schicht 4 aus PbO-haltigem Glas, eine Schutzschicht 5 aus MgO und Entladungselektroden 6,7 aus ITO aufwies, zum Bau eines AC-Plasmabildschirms verwendet. Als Gasfüllung wurde eine Gemisch aus 10 Vol.-% Xe und 90 Vol.-% Ne benutzt.

Der Farbpunkt der grünen Pixels des so erhaltenen Plasmabildschirms lag bei x = 0.264 und y = 0.661. Das Plasmabildschirm wies eine größere Effizienz und eine verbesserte Peakluminanz auf.

### Ausführungsbeispiel 2

Zur Herstellung eines Plasmabildschirm wurde zunächst eine Siebdruckpaste, 30 Gew.-%: (Y,Gd)BO₃:Eu, 20 Gew.-% Y(V,P)O₄:Eu und 50% eines organisches Bindemittels enthielt, angefertigt. Mittels Siebdruck wurde die Paste auf einer Trägerplatte 2 aus Glas mit einer Rippenstruktur 12 und Adresselektroden aus Ag segmentiert aufgebracht und getrocknet. Dieser Prozessschritt wird nacheinander für die anderen beiden Leuchtstofftypen der Emissionsfarben Grün und Blau durchgeführt. Die Siebdruckpaste für das grüne Farbsegmente enthielt 50 Gew.-% Zn₂SiO₄:Mn und 50% eines organisches Bindemittels. Die Siebdruckpaste für das blaue Farbsegment enthielt 50 Gew.-% BaMgAl₁₀O₁₇:Eu und 50% eines organisches Bindemittels.
Durch thermische Behandlung der Trägerplatte 2 zwischen 400 und 600 °C in sauerstoffhaltiger Atmosphäre wurden alle in der Leuchtstoffschicht 9 verbliebenen Additive entfernt.

Diese Trägerplatte 2 wurde zusammen mit weiteren Komponenten wie in Ausführungsbeispiel 1 beschrieben, zum Bau eines Plasmabildschirms verwendet.

Der Farbpunkt der roten Bildpunkte des so erhaltenen Plasmabildschirms lag bei x = 0.646 und y = 0.345.

### Ausführungsbeispiel 3

Zur Herstellung eines Plasmabildschirm wurde zunächst eine Siebdruckpaste, 30 Gew-%: BaMgAl₁₀O₁₇:Eu, 20 Gew.-% YBO₃:Ce und 50% eines organisches Bindemittels enthielt, angefertigt. Mittels Siebdruck wurde die Paste auf einer Trägerplatte 2 aus Glas mit einer Rippenstruktur 12 und Adresselektroden aus Ag segmentiert aufgebracht und getrocknet. Dieser Prozessschritt wird nacheinander für die anderen beiden Leuchtstofftypen der Emissionsfarben Rot und Grün durchgeführt. Die Siebdruckpaste für das grüneFarbsegmente enthielt 50 Gew.-% Zn₂SiO₄:Mn und 50% eines organisches Bindemittels. Die Siebdruckpaste für das rote Farbsegment enthielt 50 Gew.-% (Y,Gd)BO₃:Eu und 50% eines organisches Bindemittels.

Durch thermische Behandlung der Trägerplatte 2 zwischen 400 und 600 °C in sauerstoffhaltiger Atmosphäre wurden alle in der Leuchtstoffschicht 9 verbliebenen Additive entfernt.

Diese Trägerplatte 2 wurde zusammen mit weiteren Komponenten wie in Ausführungsbeispiel 1 beschrieben, zum Bau eines Plasmabildschirms verwendet.

Der Farbpunkt der blauen Bildpunkte des so erhaltenen Plasmabildschirms lag bei x = 0.152 und y = 0.050.

### Ausführungsbeispiel 4

Zur Herstellung eines Plasmabildschirm wurde zunächst eine Siebdruckpaste, 30 Gew.-% (Y,Gd)BO₃:Tb, 20 Gew.-% Zn₂SiO₄:Mn und 50% eines organisches Bindemittels enthielt, angefertigt. Mittels Siebdruck wurde die Paste auf einer Trägerplatte 2 aus Glas mit einer Rippenstruktur 12 und Adresselektroden aus Ag segmentiert aufgebracht und getrocknet. Dieser Prozessschritt wird nacheinander für die anderen beiden Leuchtstofftypen der Emissionsfarben Rot und Blau durchgeführt. Die Siebdruckpaste für das rote Farbsegmente enthielt 30 Gew.-%: (Y,Gd)BO₃:Eu, 20 Gew.-% Y(V,P)O₄:Eu und 50% eines organisches Bindemittels. Die Siebdruckpaste für das blaue Farbsegment enthielt 30 Gew.-%: BaMgAl₁₀O₁₇:Eu, 20 Gew.-% YBO₃:Ce und 50% eines organisches Bindemittels.

Durch thermische Behandlung der Trägerplatte 2 zwischen 400 und 600 °C in sauerstoffhaltiger Atmosphäre wurden alle in der Leuchtstoffschicht 9 verbliebenen Additive entfernt.

Diese Trägerplatte 2 wurde zusammen mit weiteren Komponenten wie in Ausführungsbeispiel 1 beschrieben, zum Bau eines verbesserten Plasmabildschirms verwendet.

## Patentansprüche

1. Plasmabildschirm ausgerüstet mit einer Frontplatte (1), die eine Glasplatte (3), auf der eine dielektrische Schicht (4) und eine Schutzschicht (5) aufgebracht sind, aufweist, mit einer Trägerplatte (2) ausgestattet mit einer Leuchtstoffschicht (9), die eine heterogene Mischung aus mindestens zwei Leuchtstoffen enthält, die dieselbe Farbe emittieren, mit einer Rippenstruktur (12), die den Raum zwischen Frontplatte (1) und Trägerplatte (2) in Plasmazellen, die mit einem Gas gefüllt sind, aufteilt, und mit einem oder mehreren Elektroden-Arrays (6,7,10) auf der Frontplatte (1) und der Trägerplatte (2) zur Erzeugung von stillen elektrischen Entladungen in den Plasmazellen, wobei die Leuchtstoffschicht in verschiedene Farbsegmente unterteilt ist und **dadurch gekennzeichnet, dass** wenigstens ein Farbsegment eine heterogene Mischung aus mindestens zwei Leuchtstoffen enthält, die dieselbe Farbe emittieren, wobei ein Leuchtstoff eine kürzere Abklingzeit als der andere hat.

2. Plasmabildschirm nach Anspruch 1,
**dadurch gekennzeichnet,**
**dass** ein Farbsegment der Leuchtstoffschicht (9) eine heterogene Mischung aus (Y,Gd)BO₃:Eu und einem zweiten, rot-emittierenden Leuchtstoff, dessen Farbpunkt (x,y) einen y-Wert < 0.36 aufweist, enthält.

3. Plasmabildschirm nach Anspruch 2,
**dadurch gekennzeichnet,**
**dass** der zweite, rot-emittierende Leuchtstoff ausgewählt ist aus der Gruppe Y₂O₃:Eu, YVO₄:Eu, Y(V,P)O₄:Eu und (Y₁₋ₓGdₓ)₂O₃:Eu mit 0 ≤ x ≤ 1.

4. Plasmabildschirm nach Anspruch 1,
**dadurch** g**ekennzeichnet**,
**dass** ein Farbsegment der Leuchtstoffschicht (9) eine heterogene Mischung aus Zn₂SiO₄:Mn und einem Tb³⁺-aktivierten Leuchtstoff enthält.

5. Plasmabildschirm nach Anspruch 4,
**dadurch gekennzeichnet,**
**dass** der Tb³⁺-aktivierte Leuchtstoff ausgewählt ist aus der Gruppe LaPO₄:Ce,Tb,Y₂SiO₅:Tb, GdMgB₅O₁₀:Ce,Tb, CeMgAl₁₁O₁₉:Tb, GdBO₃:Tb, (Y₁₋ₓGdₓ)BO₃:Tb mit 0 ≤ x ≤ 1, YBO₃:Tb und InBO₃:Tb.

6. Plasmabildschirm nach Anspruch 2 oder 4,
**dadurch gekennzeichnet,**
**dass** ein Farbsegment der Leuchtstoffschicht (9) eine heterogene Mischung aus BaMgAl₁₀O₁₇:Eu und einem Leuchtstoff ausgewählt der aus der Gruppe der Ce³⁺-aktivierten Leuchtstoffe und der Tm³⁺-aktivierten Leuchtstoffe enthält.

7. Plasmabildschirm nach Anspruch 6,
**dadurch gekennzeichnet,**
**dass** der Ce³⁺-aktivierte Leuchtstoff ausgewählt ist aus der Gruppe YBO₃:Ce und (Y₁₋ₓGdₓ)BO₃:Ce mit 0 ≤ x ≤ 1.

8. Plasmabildschirm nach Anspruch 6,
**dadurch gekennzeichnet,**
**dass** der Tm³⁺-aktivierte Leuchtstoff LaBO₃:Tm ist.

## Claims

1. A plasma picture screen provided with a front plate (1) comprising a glass plate (3) on which a dielectric layer (4) and a protective layer (5) are provided, with a carrier plate (2) provided with a phosphor layer (9) comprising a heterogeneous mixture of at least two phosphors which emit the same color, with a ribbed structure (12) which subdivides the space between the front plate (1) and the carrier plate (2) into plasma cells which are filled with a gas, and with one or several electrode arrays (6, 7, 10) on the front plate (1) and the carrier plate (2) for generating electrical corona discharges in the plasma cells, wherein the phosphor layer is subdivided into individual color segments, **characterized in that** at least one segment comprises a heterogeneous mixture of at least two phosphors which emit the same color, one phosphor having a shorter decay time than the other one.

2. A plasma picture screen as claimed in claim 1, **characterized in that** a color segment of the phosphor layer (9) comprises a heterogeneous mixture of (Y,Gd)BO₃:Eu and a second red-emitting phosphor whose color point (x, y) has a y-value < 0.36.

3. A plasma picture screen as claimed in claim 2, **characterized in that** the second red-emitting phosphor is chosen from the group of Y₂O₃:Eu, YVO₄:Eu, Y(V,P)O₄:Eu and (Y₁₋ₓGdₓ)O₃:Eu, with 0 ≤ x ≤ 1.

4. A plasma picture screen as claimed in claim 1, **characterized in that** a color segment of the phosphor layer (9) comprises a heterogeneous mixture of Zn₂SiO₄:Mn and a Tb³⁺-activated phosphor.

5. A plasma picture screen as claimed in claim 4, **characterized in that** the Tb³⁺-activated phosphor is chosen from the group of LaPO₄:Ce,Tb, Y₂SiO₅:Tb, GdMgB₅O₁₀:Ce,Tb, CeMgAl₁₁O₁₉:Tb, GdBO₃:Tb, (Y₁₋ₓGdₓ)BO₃:Tb, with 0 ≤ x ≤ 1, YB0₃:Tb, and InBO₃:Tb.

6. A plasma picture screen as claimed in claim 1, **characterized in that** a color segment of the phosphor layer (9) comprises a heterogeneous mixture of BaMgAl₁₀O₁₇:Eu and a phosphor chosen from the group of Ce³⁺-activated phosphors and Tm³⁺-activated phosphors.

7. A plasma picture screen as claimed in claim 6, **characterized in that** the Ce³⁺-activated phosphor is chosen from the group of YBO₃:Ce and (Y₁₋ₓGdₓ)BO₃ :Ce, with 0 ≤ x ≤ 1.

8. A plasma picture screen as claimed in claim 6, **characterized in that** the Tm³⁺-activated phosphor is LaBO₃:Tm.

## Revendications

1. Ecran au plasma équipé d'une plaque frontale (1) qui présente une plaque en verre (3) sur laquelle sont appliquées une couche diélectrique (4) et une couche de protection (5), d'une plaque de support (2) équipée d'une couche luminescente (9), qui contient un mélange hétérogène d'au moins deux substances luminescentes qui émettent la même couleur, d'une structure nervurée (12) qui subdivise l'espace entre la plaque frontale (1) et la plaque de support (2) dans les cellules au plasma qui sont remplies d'un gaz et d'un ou plusieurs réseaux d'électrodes (6, 7, 10) sur la plaque frontale (1) et sur la plaque de support (2) en vue de la production de décharges électriques silencieuses dans les cellules au plasma, dans lequel la couche luminescente est subdivisée en différents segments de couleur et
**caractérisé en ce**
**qu'**au moins un segment de couleur contient un mélange hétérogène d'au moins deux substances luminescentes qui émettent la même couleur, une substance luminescente ayant un temps d'extinction plus court que l'autre.

2. Ecran au plasma selon la revendication 1,
**caractérisé en ce**
**qu'**un segment de couleur de la couche luminescente (9) contient un mélange hétérogène de (Y,Gd)BO₃:Eu et une deuxième substance luminescente émettant en rouge pour le point de couleur (x, y) présente une valeur y < 0,36.

3. Ecran au plasma selon la revendication 2,
**caractérisé en ce**
**que** la deuxième substance luminescente émettant en rouge est sélectionnée dans le groupe Y₂O₃:Eu, Y(V,P)O₄:Eu et (Y₁₋ₓ,Gdₓ)₂O₃:Eu avec 0 ≤ x ≤ 1.

4. Ecran au plasma selon la revendication 1,
**caractérisé en ce**
**qu'**un segment de couleur de la couche luminescente (9) contient un mélange hétérogène de Zn₂SiO₄:Mn et d'une substance luminescente activée au Tb³⁺.

5. Ecran au plasma selon la revendication 4,
**caractérisé en ce**
**que** la substance luminescente activée au Tb³⁺ est sélectionnée dans le groupe LaPO₄:Ce,Tb, Y₂SiO₅:Tb, GdMgB₅O₁₀:Ce,Tb, CeMgAl₁₁O₁₉:Tb, GdBO₃:Tb, (Y₁₋ₓ,Gdₓ)BO₃:Tb avec 0 ≤ x ≤ 1, YBO₃:Tb et InBO₃:Tb.

6. Ecran au plasma selon l'une des revendications 2 ou 4,
**caractérisé en ce**
**qu'**un segment de couleur de la couche luminescente (9) contient un mélange hétérogène de BaMgAl₁₀O₁₇:Eu et une substance luminescente sélectionnée dans le groupe des substances luminescentes activées au Ce³⁺ et des substances luminescentes activées au Tm³⁺.

7. Ecran au plasma selon la revendication 6
**caractérisé en ce**
**que** la substance luminescente activée au Ce³⁺ est sélectionnée dans le groupe YBO₃:Ce et (Y₁₋ₓ,Gdₓ)BO₃:Ce avec 0 ≤ x ≤ 1.

8. Ecran au plasma selon la revendication 6
**caractérisé en ce**
**que** la substance luminescente activée au Tm³⁺ est sélectionnée dans le groupe LaBO₃:Tm.
